# FASCICULE DE BREVET EUROPEEN

(11) **EP 3 030 520 B1**
(45) Date de publication et mention de la délivrance du brevet: **09.06.2021**
(21) Numéro de dépôt: 14790176.3
(22) Date de dépôt: 04.08.2014
(51) Int. Cl.: B01J 20/18, B01J 20/28, B01J 20/30, B01J 29/00, B01J 29/04, B01J 29/08, B01J 35/00, C01B 39/02, B01J 35/02, B01J 35/10, B01J 37/00, C01B 39/24

(54) **MATÉRIAU ZÉOLITHIQUE À BASE DE ZÉOLITHE MÉSOPOREUSE**
ZEOLITHMATERIAL AUS MESOPORÖSEM ZEOLITH
ZEOLITE MATERIAL MADE FROM MESOPOROUS ZEOLITE

(30) Priorité: 05.08.2013 FR 1357763
(43) Date de publication de la demande: 15.06.2016
(73) Titulaire: ARKEMA FRANCE, 92700 Colombes (FR)
(72) Inventeur: BOUVIER, Ludivine, F-64300 Orthez (FR); LUTZ, Cécile, F-64290 Gan (FR); PERSILLON, Quitterie, F-64160 Morlaas (FR); NICOLAS, Serge, F-64000 PAU (FR); LECOMTE, Yvan, F-64370 Arthez de Béarn (FR)
(74) Mandataire: Arkema Patent
(86) Numéro de dépôt international: PCT/FR2014/052029
(87) Numéro de publication internationale: WO 2015/019014

(56) Documents cités:
- EP-A2- 0 906 784
- WO-A1-95/18675
- WO-A1-2013/060666
- WO-A2-2008/152319
- FR-A1- 2 981 582
- NINA-LUISA MICHELS ET AL: "Hierarchically Structured Zeolite Bodies: Assembling Micro-, Meso-, and Macroporosity Levels in Complex Materials with Enhanced Properties", ADVANCED FUNCTIONAL MATERIALS, WILEY - V C H VERLAG GMBH & CO. KGAA, DE, vol. 22, no. 12, 20 juin 2012 (2012-06-20) , pages 2509-2518, XP001576540, ISSN: 1616-301X, DOI: 10.1002/ADFM.201103120 [extrait le 2012-03-21]

## Description

La présente invention concerne des matériaux zéolithiques sous forme d'agglomérés comprenant au moins une zéolithe mésoporeuse, ainsi que le procédé de préparation desdits matériaux zéolithiques agglomérés.

Les zéolithes mésoporeuses présentent une grande utilité dans de nombreux domaines industriels, à la fois comme catalyseurs, supports de catalyseurs mais aussi comme adsorbants, dans la mesure où leur porosité importante exprimée en termes de rapport [surface/volume] permet aux molécules avec lesquelles elles sont mises en contact d'accéder facilement au cœur des particules et de réagir sur une surface importante, exaltant ainsi les propriétés catalytiques et/ou adsorbantes de ces matériaux.

La synthèse de solides mésoporeux inorganiques par effet structurant de tensioactif, a été décrite pour la première fois dans le brevet US3556725.

La société Mobil, au cours des années '90, a entrepris de nombreux travaux relatifs aux solides inorganiques mésoporeux, notamment relatifs à des composés (alumino)siliciques, et plus particulièrement le composé MCM 41 (pour Mobil Composition Of Matter 41) dont on trouve décrit un procédé de synthèse dans Nature, (1992), vol. 359, pp.710-712, et qui ont fait l'objet de nombreux brevets et articles scientifiques ultérieurs.

De tels matériaux mésoporeux sont maintenant bien connus à l'échelle du laboratoire, tant au niveau de leur structure et de leur distribution poreuse, de leurs modes de synthèse, que de leurs applications possibles en tant que catalyseurs et/ou comme adsorbants.

Ces matériaux inorganiques mésoporeux présentent comme inconvénient majeur d'être instables thermiquement en présence d'eau ce qui limite grandement les applications industrielles.

La recherche de solides inorganiques mésoporeux a conduit au développement de zéolithes mésoporeuses obtenues par divers procédés, comme par exemple décrit dans l'article de Feng-Shou Xiao et al. (Hierarchically Structured Porous Materials, (2012), 435-455, Wiley-VCH Verlag GmbH & Co. KGaA: Weinheim, Germany 978-3-527-32788-1).

Une des voies envisagées est celle des post-traitements à partir de cristaux zéolithiques, sous forme de poudre, initialement synthétisés. Ces post-traitements sont par exemple des traitements à la vapeur d'eau, suivis de traitements acides et/ou basiques qui conduisent à une désalumination, puis suivis de traitements complémentaires pour éliminer les espèces extra-réseaux.

Le brevet US8486369 et les demandes de brevets US20130183229, US20130183231, ainsi que la demande WO2013106816 sont des exemples qui illustrent de tels procédés de préparation de zéolithe à structure mésoporeuse par divers traitements successifs à la vapeur puis avec des acides et en présence de surfactant.

De tels procédés tendent à créer des volumes poreux importants mais en contrepartie dégradent fortement la cristallinité de la poudre de zéolithe initiale qui chute presque de moitié. Il est par ailleurs nécessaire de recourir à des traitements complémentaires de cautérisation pour stabiliser la charpente zéolithique, éliminer les atomes d'aluminium extra-réseaux et pouvoir ainsi réaliser des traitements thermiques ultérieurs.

De tels procédés sont donc très lourds à mettre en œuvre du fait de la succession de nombreuses étapes, peu économiques et donc difficilement industrialisables. En outre, la multitude d'étapes tend à fragiliser la structure zéolithique et par conséquent réduire les propriétés intrinsèques de ces zéolithes.

C'est pourquoi on privilégie aujourd'hui les synthèses de zéolithes mésoporeuses, par voie directe, et sans post-traitement connu de l'art antérieur. Diverses publications montrent la faisabilité de synthèse au laboratoire de zéolithes mésoporeuses, et à titre d'exemples, on note en particulier les demandes WO2007043731 et EP2592049, où la synthèse de zéolithes mésoporeuses est réalisée à base de surfactant, et notamment celui de type TPOAC (chlorure de [3-(triméthoxysilyl)propyl]octadécyl-diméthylammonium).

D'autres publications encore illustrent de tels travaux, comme par exemple ceux de R. Ryoo (Nature Materials, (2006), vol. 5, p. 718) qui décrivent une synthèse de LTA avec mésopores, ou encore ceux de W. Schwieger (Angew. Chem. Int. Ed., (2012), 51, 1962-1965) qui décrivent la synthèse de FAU (X) mésoporeuse en utilisant le TPHAC (chlorure de [3-(triméthoxysilyl)propyl]hexadécyldiméthylammonium), en tant qu'agent structurant.

Cependant, il n'existe aujourd'hui aucune description concernant la préparation d'agglomérés à base de zéolithes mésoporeuses, agglomérés dans lesquels les propriétés spécifiques de ces zéolithes mésoporeuses, en particulier leur microporosité, sont conservées. De ce fait, il reste qu'aujourd'hui aucune application industrielle, notamment dans le domaine de la séparation des liquides et/ou des gaz, de l'échange ionique ou dans le domaine de la catalyse, ne met en œuvre de tels agglomérés zéolithiques à forte microporosité comprenant au moins une zéolithe mésoporeuse.

Il doit être rappelé que l'industrie, et notamment dans les domaines d'application évoqués ci-dessus, utilise dans la plupart des cas des agglomérés zéolithiques. En effet, les zéolites synthétiques sont le plus souvent obtenues à l'issue d'un processus de nucléation et de cristallisation de gels de silico-aluminates dont la taille des cristallites produites est de l'ordre du micromètre à quelques micromètres : on parle alors de cristaux de zéolithe sous forme de poudre.

Ces poudres sont d'un emploi industriel malaisé car elles sont difficiles à manipuler en raison de leur mauvaise coulabilité, elles génèrent des pertes de charge importantes et une mauvaise répartition des flux dans les lits, notamment dans les procédés dynamiques qui impliquent des fluides en écoulement.

Aussi préfère-t-on les formes agglomérées de ces poudres, que l'on appelle plus couramment agglomérés zéolithiques et qui peuvent être sous forme de grains, de filés, d'extrudés ou autres agglomérats, ces dites formes pouvant être obtenues par extrusion, pastillage, atomisation ou autres techniques d'agglomération bien connues de l'homme du métier. Ces agglomérats ne présentent pas les inconvénients inhérents aux matières pulvérulentes.

Ces agglomérés sont en général constitués de cristaux de zéolithe(s) et d'un liant, le plus souvent inerte vis-à-vis de l'application à laquelle est destinée la zéolithe, ledit liant étant destiné à assurer la cohésion des cristaux de zéolithe(s) entre eux et de leur conférer la résistance mécanique suffisante et nécessaire pour l'application industrielle envisagée. C'est ainsi le cas par exemple dans la demande internationale WO2008152319 A2 qui décrit des agglomérés à base de zéolithes microporeuses conventionnelles et d'argiles, ainsi que leur procédé d'obtention, agglomérés qui sont notamment utilisés dans des procédés d'adsorption en phase gaz ou liquide.

La présente invention a ainsi pour objectif de proposer un matériau zéolithique sous forme d'aggloméré comprenant au moins une zéolithe mésoporeuse. Comme autre objectif, la présente invention propose un matériau zéolithique sous forme d'aggloméré comprenant au moins une zéolithe mésoporeuse, et qui présente des propriétés de cristallinité améliorées par rapport aux matériaux de l'art antérieur.

Un autre objectif encore consiste en la fourniture d'un procédé de préparation d'un matériau zéolithique sous forme d'aggloméré comprenant au moins une zéolithe mésoporeuse, ledit procédé étant facilement industrialisable, et amélioré en termes de coût et de durée, par rapport aux procédés de fabrication des agglomérés connus de l'art antérieur, tout en évitant une dégradation des propriétés de la ou des zéolithe(s) mésoporeuse(s) présente(s) dans ledit matériau.

Plus particulièrement, un des objectifs de la présente invention consiste à proposer un matériau zéolithique aggloméré maintenant en son sein les propriétés de pureté, cristallinité et distribution poreuse de la ou des zéolithe(s) mésoporeuse(s) de départ et présentant par ailleurs une bonne résistance mécanique et une cristallinité optimisée, et permettre ainsi une utilisation industrielle aisée et efficace, par exemples dans les domaines de la catalyse (catalyseurs ou support de catalyseurs), ou encore dans les procédés de séparation, d'adsorption ou d'échange ionique, dynamiques ou statiques.

D'autres objectifs encore apparaîtront à la lumière de la description de la présente invention qui suit.

La Demanderesse a découvert qu'il est possible de pallier en totalité ou au moins en partie les inconvénients cités dans l'art antérieur et de fabriquer de manière économique et optimisée un matériau zéolithique aggloméré qui comprend au moins une zéolithe mésoporeuse, dont les propriétés initiales de microporosité sont maintenues, c'est-à-dire que la zéolithe mésoporeuse utilisée pour la réalisation dudit matériau aggloméré conserve l'intégrité de sa microporosité au sein dudit matériau.

Le matériau aggloméré présente un haut niveau de cristallinité et est doté d'une densité et de propriétés mécaniques suffisantes pour une utilisation en procédés d'adsorption ou d'échange ionique en dynamique ou statique.

Sauf indication contraire dans la présente description, les proportions indiquées sont des proportions pondérales, comptées pour les constituants solides en équivalents calcinés, sur la base de calcination réalisée à 950°C pendant 1 heure.

La présente invention concerne un matériau zéolithique aggloméré comprenant au moins une zéolithe mésoporeuse, ladite zéolithe mésoporeuse étant choisie parmi les zéolithes mésoporeuses de structure LTA, EMT et FAU de rapport atomique Si/AI compris entre 1 et 1,4, bornes incluses, et éventuellement une ou plusieurs zéolithes non mésoporeuses, ledit matériau présentant au moins les caractéristiques suivantes :
- une teneur totale en zéolithe(s) d'au moins 70%, de préférence d'au moins 80%, de préférence encore d'au moins 90%, en poids par rapport au poids total de l'aggloméré,
- une teneur en zéolithe(s) mésoporeuse(s) supérieure ou égale à 30%, de préférence supérieure ou égale à 50%, de préférence encore supérieure ou égale à 70%, plus préférentiellement encore supérieure ou égale à 80%, et avantageusement supérieure ou égale à 90%,
- une teneur en liant exprimée en pourcentages anhydres, après calcination réalisée à 950°C pendant 1 heure, inférieure ou égale à 30%, de préférence inférieure ou égale à 20%, et avantageusement inférieure ou égale à 10%,
- un diamètre volumique moyen (D50), ou une longueur (plus grande dimension lorsque le matériau n'est pas sphérique), inférieur(e) ou égal(e) à 7 mm, de préférence compris entre 0,05 mm et 7 mm, de manière encore préférée compris entre 0,2 mm à 5 mm et plus préférentiellement entre 0,2 mm et 2,5 mm, bornes incluses, et
- soit une résistance à l'écrasement en lit (REL) mesurée selon la norme ASTM 7084-04 comprise entre 0,5 MPa et 3 MPa, de préférence entre 0,75 MPa et 2,5 MPa, pour un matériau de diamètre volumique moyen (D50), ou une longueur (plus grande dimension lorsque le matériau n'est pas sphérique), inférieur(e) à 1 mm, bornes incluses,
- soit une résistance à l'écrasement en grain, mesurée selon les normes ASTM D 4179 (2011) et ASTM D 6175 (2013), comprise entre 0,5 daN et 30 daN, de préférence comprise entre 1 daN et 20 daN, pour un matériau de diamètre volumique moyen (D50), ou une longueur (plus grande dimension lorsque le matériau n'est pas sphérique), supérieur(e) ou égal(e) à 1 mm, bornes incluses.

Selon un mode de réalisation préféré, le matériau de la présente invention présente en outre une masse volumique apparente comprise entre 0,4 g.cm⁻³ et 1 g.cm⁻³, bornes incluses.

Dans la présente invention, les agglomérés comprennent au moins une zéolithe mésoporeuse, ladite zéolithe mésoporeuse étant choisie parmi les zéolithes mésoporeuses de structure LTA, EMT et FAU de rapport atomique Si/AI compris entre 1 et 1,4, bornes incluses, et de préférence parmi les zéolithes mésoporeuses de structure FAU de type X, MSX et LSX. Par zéolithe MSX (Medium Silica X), on entend une zéolithe de type FAU présentant un ratio atomique Si/AI compris entre environ 1,05 et environ 1,15, bornes incluses. Par zéolithe LSX (Low Silica X), on entend une zéolithe de type FAU présentant un ratio atomique Si/AI égal à environ 1.

Ladite zéolithe mésoporeuse se présente sous forme de cristaux dont le diamètre moyen en nombre, mesuré au microscope électronique à balayage (MEB), est inférieur à 20 µm, de préférence compris entre 0,1 µm et 20 µm, de préférence compris entre 0,1 et 10 µm, de préférence compris entre 0,5 µm et 10 µm, de manière plus préférée compris entre 0,5 µm et 5 µm, bornes incluses.

Dans la présente invention, on entend par « zéolithe mésoporeuse », une zéolithe présentant une surface externe mésoporeuse, définie par la méthode du t-plot décrite plus loin, comprise entre 40 m².g⁻¹ et 400 m².g⁻¹, de préférence entre 60 m².g⁻¹ et 200 m².g⁻¹, bornes incluses. Par extension, au sens de la présente invention, une « zéolithe non mésoporeuse » est une zéolithe présentant éventuellement une surface externe mésoporeuse, définie par la méthode du t-plot décrite plus loin, strictement inférieure à 40 m².g⁻¹.

Les mésopores de l'adsorbant zéolithique selon l'invention sont facilement identifiables par observation au moyen d'un microscope électronique à transmission (MET ou « TEM » en langue anglaise), comme décrit par exemple dans US7785563.

Selon un mode de réalisation préféré, le procédé selon l'invention utilise un adsorbant zéolithique comprenant des cristaux mésoporeux de zéolithe LTA, EMT et FAU, et de préférence FAU. Par « mésoporeux », on entend des cristaux zéolithiques (microporeux) qui présentent, conjointement à la microporosité, des cavités internes de taille nanométrique (mésoporosité), facilement identifiables par observation au moyen d'un microscope électronique à transmission (MET ou « TEM » en langue anglaise), comme décrit par exemple dans US7785563.

Comme indiqué dans US7785563, l'observation par microscopie électronique à transmission (MET) permet de vérifier si les particules zéolithiques sont des cristaux de zéolithe pleins (i.e. non mésoporeux) ou des agrégats de cristaux de zéolithes pleins ou des cristaux mésoporeux. De manière préférée, les adsorbants du procédé selon l'invention contiennent une quantité supérieure ou égale à 30%, de préférence supérieure ou égale à 50%, de préférence encore supérieure ou égale à 70%, plus préférentiellement encore supérieure ou égale à 80%, et avantageusement supérieure ou égale à 90%, en nombre des cristaux zéolithiques mésoporeux et non des cristaux pleins, par rapport à l'ensemble des cristaux. Cette analyse statistique est effectuée avantageusement par analyse d'au moins 50 clichés MET.

Les cristaux de la (ou des) zéolithe(s) mésoporeuse(s) comprise(s) dans le matériau zéolithique de l'invention, seuls ou en mélange avec d'autres cristaux de zéolithes non mésoporeuses, sont agglomérés avec un liant. Selon un aspect préféré de l'invention, la teneur en liant est la plus faible possible, afin d'optimiser la teneur en zéolithe(s) du matériau zéolithique.

Le liant compris dans le matériau aggloméré zéolithique de la présente invention comprend, et de préférence consiste en, une argile ou un mélange d'argiles. Ces argiles sont de préférence choisies parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions.

Dans la présente invention, on entend par « liant », un liant d'agglomération qui permet d'assurer la cohésion des cristaux de zéolithe(s) dans le matériau zéolithique aggloméré de l'invention. Ce liant se distingue en outre des cristaux de zéolithe(s) en ce qu'ils ne présentent pas de structure cristalline zéolithique après calcination, raison pour laquelle le liant est souvent qualifié d'inerte, et plus précisément inerte vis-à-vis de l'adsorption et/ou de l'échange ionique.

Selon un aspect particulièrement préféré, le liant présent dans le matériau zéolithique aggloméré de l'invention est uniquement constitué d'une ou plusieurs argiles, et de préférence d'une seule argile.

Le matériau aggloméré zéolithique selon la présente invention peut également comprendre un ou plusieurs autres composants, en quantité comprise entre 0 et 5%, de préférence entre 0 et 1%, de préférence encore entre 0 et 0,5%, bornes incluses, les pourcentages étant exprimés en poids par rapport au poids total du matériau aggloméré zéolithique. Ce ou ces autre(s) composant(s) est(sont) généralement les résidus des additifs, et autres auxiliaires de synthèse dudit matériau aggloméré zéolithique, et en particulier ceux qui seront décrits plus loin dans la présente description.

Des exemples de tels autres composants comprennent notamment les cendres des additifs après calcination, de la silice, et autres. Il doit être compris que ces autres composants sont généralement présents à l'état de résidus ou de traces et ne sont pas utilisés pour apporter un quelconque caractère liant ou cohésif aux matériaux zéolithiques agglomérés comprenant au moins une zéolithe mésoporeuse de l'invention.

Le matériau zéolithique aggloméré de la présente invention peut se présenter sous diverses formes telles que celles bien connues de l'homme du métier, spécialiste de l'agglomération de poudres, de cristaux, notamment de cristaux de zéolithes, et par exemple et de manière non limitative, le matériau aggloméré zéolithique de l'invention peut se présenter sous forme de billes, de filés, d'extrudés ou autres.

Par ailleurs, on observe que dans le cas de zéolithes où la mésoporosité est obtenue par post-traitement (comme par exemple dans WO2013106816) le volume microporeux décroît fortement lorsque la surface externe mésoporeuse augmente. En revanche, dans le cas des zéolithes de la présente l'invention, la mésoporosité est créée lors de la synthèse des cristaux (synthèse directe) et on observe que le volume microporeux des adsorbants reste sensiblement constant, et ceci même lorsque la surface externe mésoporeuse augmente. Ceci montre que les adsorbants zéolithiques selon l'invention présentent, au contraire des adsorbants zéolithiques mésoporeux de l'art antérieur, à la fois une surface externe mésoporeuse élevée et un volume microporeux élevé.

Selon un autre aspect, la présente invention a également pour objet un procédé de préparation du matériau zéolithique aggloméré décrit précédemment comprenant au moins les étapes de mélange d'au moins une zéolithe mésoporeuse, éventuellement avec un ou plusieurs additifs, avec au moins un liant, dans les proportions indiquées précédemment, et mise en forme du matériau aggloméré, selon toute méthode connue de l'homme du métier, par exemple par extrusion, pastillage, atomisation ou autres techniques d'agglomération bien connues de l'homme du métier.

Le procédé de l'invention comprend au moins les étapes de :
a) agglomération de cristaux d'au moins une zéolithe mésoporeuse de diamètre moyen en nombre compris entre 0,1 µm et 20 µm, de préférence entre 0,1 µm et 10 µm, de manière plus préférée entre 0,5 µm et 10 µm et plus préférentiellement encore entre 0,5 µm et 5 µm, et de surface externe mésoporeuse, définie par la méthode du t-plot décrite plus loin, comprise entre 40 m².g⁻¹ et 400 m².g⁻¹, de préférence entre 60 m².g⁻¹ et 200 m².g⁻¹, bornes incluses, avec un liant comprenant au moins 80% d'argile ou d'un mélange d'argiles, éventuellement zéolithisable(s), et avec jusqu'à 5% d'additifs, ainsi qu'avec la quantité d'eau qui permet la mise en forme du matériau aggloméré, ladite zéolithe mésoporeuse étant choisie parmi les zéolithes mésoporeuses de structure LTA, EMT et FAU de rapport atomique Si/AI compris entre 1 et 1,4, bornes incluses, le liant comprenant une argile ou un mélange d'argiles choisies parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions ;
b) séchage des agglomérats à une température comprise entre 50°C et 150°C ;
c) calcination des agglomérats de l'étape b) sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une température supérieure à 150°C, typiquement comprise entre 180°C et 800°C, préférentiellement entre 200°C et 650°C, pendant quelques heures, par exemple de 2 à 6 heures ;
d) éventuellement zéolithisation du liant par mise en contact des agglomérats obtenus à l'étape c) avec une solution basique alcaline ;
e) éventuellement échange(s) cationique(s) des agglomérats de l'étape c) ou de l'étape d) par mise en contact avec une solution d'au moins un sel de métal alcalin ou alcalino-terreux ;
f) puis lavage et séchage des agglomérats obtenus aux étapes d) ou e) dans les conditions décrites à l'étape b), et
g) obtention du matériau zéolithique aggloméré par activation des agglomérats obtenus à l'étape f) dans les conditions décrites à l'étape c)

On ne sortirait pas du cadre de l'invention si la au moins une zéolithe mésoporeuse utilisée à l'étape a) d'agglomération avait subi au préalable un ou des échange(s) cationique(s). Dans ce cas, l'étape e) devient par conséquent non nécessaire.

Selon un mode préféré de l'invention, la poudre (cristaux de zéolithe) ainsi obtenue est agglomérée telle que, après séchage et/ou après calcination et/ou après échange ionique, au moyen d'un liant inerte au sens de l'adsorption.

Selon un mode de réalisation tout à fait préféré du procédé de la présente invention, on procède, à l'étape a), à l'agglomération de cristaux d'une zéolithe préparée en présence d'un gabarit sacrificiel qui est destiné à être éliminé selon les méthodes connues de l'homme du métier, par exemple par calcination, dans le but de créer une mésoporosité dans la zéolithe et ainsi obtenir une zéolithe mésoporeuse.

Le gabarit sacrificiel utilisé peut être de tous types connus de l'homme du métier et notamment ceux décrits dans la demande WO2007/043731. Selon un mode de réalisation préféré, le gabarit sacrificiel est avantageusement choisi parmi les organosilanes et plus préférentiellement parmi le chlorure de [3-(triméthoxysilyl)propyl]-octadecyldiméthylammonium, le chlorure de [3-(triméthoxysilyl)propyl]hexadécyl-diméthylammonium, le chlorure de [3-(triméthoxysilyl)propyl]dodécyldiméthylammonium, le chlorure de [3-(triméthoxysilyl)propyl]octylammonium, la N-[3-(triméthoxysilyl)-propyl]aniline, le 3-[2-(2-aminoéthylamino)éthylamino]propyltriméthoxysilane, la N-[3-(triméthoxysilyl)propyl]-N'-(4-vinylbenzyl)éthylènediamine, le triéthoxy-3-(2-imidazolin-1-yl)propylsilane, la 1-[3-(triméthoxysilyl)propyl]urée, la N-[3-(triméthoxysilyl)propyl]éthylène-diamine, le [3-(diéthylamino)propyl]triméthoxysilane, le (3-glycidyloxypropyl)-triméthoxysilane, le méthacrylate de 3-(triméthoxysilyl)propyle, le [2-(cyclohexényl)-éthyl]triéthoxysilane, le dodécyltriéthoxysilane, l'hexadécyltriméthoxysilane, le (3-amino-propyl)triméthoxysilane, le (3-mercaptopropyl)triméthoxysilane, le (3-chloropropyl)-triméthoxysilane, et les mélanges de deux ou plusieurs d'entre eux en toutes proportions.

Parmi les gabarits sacrificiels listés ci-dessus, on préfère tout particulièrement le chlorure de [3-(triméthoxysilyl)propyl]octadecyldiméthylammonium, ou TPOAC.

On peut également utiliser des gabarits sacrificiels de masse molaire plus élevée et par exemple les PPDA (Polymer Poly-DiallyldimethylAmmonium), PVB (PolyVinyl Butyral) et autres composés oligomères connus dans le domaine pour augmenter le diamètre des mésopores.

L'étape supplémentaire d'élimination du gabarit sacrificiel peut être effectuée à tout moment au cours du procédé de préparation du matériau zéolithique aggloméré de l'invention. L'élimination dudit gabarit sacrificiel peut ainsi avantageusement être effectuée par calcination des cristaux de zéolithe avant l'étape d'agglomération a), ou encore de manière concomitante avec l'étape c).

On ne sortirait pas du cadre de l'invention si la(ou les) zéolithe(s) avant agglomération avaient subi un ou plusieurs échange(s) successifs avec des sels de métaux alcalins ou alcalino-terreux.

Les cristaux séchés sont ensuite soumis à calcination, étape nécessaire pour libérer à la fois la microporosité (élimination de l'eau) et la mésoporosité (élimination de l'agent structurant). En outre, la calcination permet l'élimination du gabarit sacrificiel. Cette étape de calcination peut être effectuée selon toute méthode de calcination connue de l'homme du métier et par exemple, et de manière non limitative, la calcination des cristaux de zéolithe comprenant le gabarit sacrificiel peut être effectuée sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une ou des températures supérieures à 150°C, typiquement comprises entre 180°C et 800°C, préférentiellement entre 200°C et 650°C, pendant quelques heures, par exemple entre 2 et 6 heures. La nature des gaz, les rampes de montée en température et les paliers successifs de températures, leurs durées seront adaptées en fonction de la nature du gabarit sacrificiel.

La taille des cristaux de zéolithes mésoporeuses utilisées à l'étape a) et des cristaux de zéolithes mésoporeuses dans les agglomérats est mesurée par observation au microscope électronique à balayage (MEB). Cette observation MEB permet également de confirmer la présence de phase non zéolithique comprenant par exemple du liant résiduel (non converti lors de l'étape de zéolithisation) ou toute autre phase amorphe dans les agglomérats. Dans la description de la présente invention, on emploie l'appellation « diamètre moyen en nombre » ou bien « taille » pour les cristaux de zéolithe. La méthode de mesure de ces grandeurs est explicitée plus loin dans la description.

L'agglomération et la mise en forme (étape a) peuvent être réalisées selon toutes les techniques connues de l'homme de l'art, telles qu'extrusion, compactage, agglomération sur assiette granulatrice, tambour granulateur, atomisation et autres. Les proportions de liant d'agglomération et de zéolithes mises en œuvre sont typiquement celles de l'art antérieur, c'est-à-dire comprises entre 5 parties et 30 parties en poids de liant pour 95 parties à 70 parties en poids de zéolithe. Les agglomérats issus de l'étape a), qu'ils soient sous forme de billes, d'extrudés ou autres, ont en général un diamètre volumique en nombre, ou une longueur (plus grande dimension lorsqu'ils ne sont pas sphériques), inférieur ou égal à 7 mm, de préférence compris entre 0,05 mm et 7 mm, de manière encore préférée compris entre 0,2 mm et 5 mm et plus préférentiellement entre 0,2 mm et 2,5 mm.

Lors de l'étape a), outre le ou les cristaux de zéolithe(s) et le liant, un ou plusieurs additifs peuvent également être ajoutés. Les additifs sont préférentiellement organiques, par exemple de la lignine, de l'amidon, de la carboxyméthylcellulose, des molécules tensio-actives (cationiques, anioniques, non ioniques ou amphotères), destinées à faciliter la manipulation de la pâte zéolithe(s)/argile(s) par modification de la rhéologie et/ou du pouvoir collant ou à conférer aux agglomérés finaux des propriétés satisfaisantes, notamment de macroporosité. On peut citer de manière préférentielle mais non exhaustive les méthyl-celluloses et leurs dérivés, les lignosulfonates, les acides polycarboxyliques et les acides de copolymères carboxyliques, leurs derivés aminés et leurs sels, notamment les sels alcalins et les sels d'ammonium. Les additifs sont introduits à raison de 0 à 5%, de préférence de 0,1% à 2%.

Les additifs peuvent aussi être une source de silice liquide et/ou solide, de préférence représentant de 1% à 5% de la masse totale desdits solides. La source éventuelle de silice peut être de tout type connu de l'homme du métier, spécialiste de la synthèse de zéolithes, par exemple de la silice colloïdale, des diatomées, de la perlite, des cendres de calcination (« fly ash » en langue anglaise), du sable, ou toute autre forme de silice solide.

Lors de l'étape de calcination c), la nature des gaz, les rampes de montée en température et les paliers successifs de températures, ainsi que leurs durées respectives, seront adaptés en fonction de la nature du gabarit sacrificiel à éliminer et en fonction de la nature du liant mis en œuvre à l'étape d'agglomération a).

Lors de l'étape optionnelle d), la zéolithisation du liant d'agglomération est pratiquée selon toute méthode maintenant bien connue de l'homme du métier et peut par exemple être réalisée par immersion du produit de l'étape c) dans une solution basique alcaline, en général aqueuse, par exemple une solution aqueuse d'hydroxyde de sodium et/ou d'hydroxyde de potassium.

Les matériaux zéolithiques agglomérés selon la présente invention possèdent à la fois les caractéristiques des zéolithes mésoporeuses, mais aussi notamment les propriétés mécaniques des agglomérés zéolithiques conventionnels connus de l'art antérieur, c'est-à-dire où la zéolithe est non-mésoporeuse.

Plus particulièrement, les matériaux zéolithiques agglomérés de l'invention montrent qu'il est possible de maintenir la cristallinité et la mésoporosité de la zéolithe au sein d'un matériau aggloméré zéolithique, et d'obtenir un matériau zéolithique aggloméré non dégradé et résistant mécaniquement. En outre le procédé de préparation des matériaux agglomérés zéolithiques à zéolithe(s) mésoporeuse(s) selon l'invention, est un procédé de mise en œuvre aisée, rapide et économique et donc facilement industrialisable avec un minimum d'étapes.

Les exemples suivants permettent d'illustrer l'objet de l'invention, et sont fournis à titre indicatif seulement, sans toutefois être destinés en aucune façon à limiter les divers modes de réalisation de la présente invention.

Dans les exemples qui suivent, les propriétés physiques des agglomérés sont évaluées par les méthodes connues de l'homme du métier, dont les principales d'entre elles sont rappelées ci-dessous.

### Perte au feu des adsorbants zéolithiques :

La perte au feu est déterminée en atmosphère oxydante, par calcination de l'échantillon à l'air à une température de 950°C ± 25°C, comme décrit dans la norme NF EN 196-2 (avril 2006). L'écart-type de mesure est inférieur à 0,1%.

### Mesure de la pureté :

La pureté des phases zéolithiques dans les agglomérats est évaluée par analyse de diffraction aux rayons X, connue de l'homme du métier sous l'acronyme DRX. Cette identification est réalisée sur un appareil DRX de la marque Bruker.

Cette analyse permet d'identifier les phases cristallines présentes dans le solide analysé car chacune des structures zéolithiques possède un spectre de diffraction (ou diffractogramme) unique défini par le positionnement des pics de diffraction et par leurs intensités relatives.

Les matériaux zéolithiques agglomérés sont broyés puis étalés et lissés sur un porte échantillon par simple compression mécanique.

Les conditions d'acquisition du spectre de diffraction (ou diffractogramme) réalisé sur l'appareil D5000 Brucker sont les suivantes :
- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min⁻¹ ;
- plage de mesure : 3° < 2θ < 50° ;
- pas : 0,02° ;
- temps de comptage par pas : 2 secondes.

L'interprétation du spectre de diffraction (ou diffractogramme) obtenu s'effectue sous EVA avec identification des phases à l'aide de la base ICCD PDF-2 release 2011.

La quantité des fractions zéolithiques X est mesurée par analyse par DRX. Cette analyse est réalisée sur un appareil de la marque Bruker, puis la quantité des fractions zéolithiques X est évaluée au moyen du logiciel TOPAS de la société Bruker.

### Analyse qualitative et quantitative par diffraction des rayons X

Cette analyse permet d'identifier les phases cristallines présentes dans le solide analysé car chacune des structures zéolithiques possède un diffractogramme (ou spectre de diffraction) unique défini par le positionnement des pics de diffraction et par leurs intensités relatives.

Les matériaux zéolithiques agglomérés sont broyés puis étalés et lissés sur un porte échantillon par simple compression mécanique. Les conditions d'acquisition du diffractogramme réalisé sur l'appareil D5000 Brucker sont les suivantes :
- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min⁻¹ ;
- plage de mesure : 3° < 2θ < 50° ;
- pas : 0,02° ;
- temps de comptage par pas : 2 secondes.

L'interprétation du spectre de diffraction (ou diffractogramme) obtenu s'effectue avec le logiciel EVA avec identification des phases à l'aide de la base ICDD PDF-2, release 2011, qui permet de mettre en évidence une phase parfaitement cristalline.

La quantité des fractions zéolithiques X, en poids, est mesurée par analyse par DRX, cette méthode est également utilisée pour mesurer la quantité des fractions zéolithiques LTA, EMT et autres FAU. Cette analyse est réalisée sur un appareil de la marque Bruker, puis la quantité en poids des fractions zéolithiques X, ou LTA, EMT et autres FAU, est évaluée au moyen du logiciel TOPAS de la société Bruker.

### Mesure du volume microporeux :

La mesure du volume microporeux est estimée par des méthodes classiques telles que les mesures des volumes de Dubinin-Raduskevitch (adsorption d'azote liquide à 77 K ou d'argon liquide à 87 K)

Le volume de Dubinin-Raduskevitch est déterminé à partir de la mesure de l'isotherme d'adsorption de gaz, tel que l'azote ou l'argon, à sa température de liquéfaction, en fonction de l'ouverture de pores de la structure zéolithique : on choisira l'argon pour la LTA et l'azote pour la FAU. Préalablement à l'adsorption, l'adsorbant zéolithique est dégazé entre 300°C et 450°C pendant une durée comprise entre 9 heures et 16 heures, sous vide (P < 6,7.10⁻⁴ Pa). La mesure des isothermes d'adsorption est ensuite effectuée sur un appareil de type ASAP 2020 de Micromeritics, en prenant au moins 35 points de mesure à des pressions relatives de rapport P/P0 compris entre 0,002 et 1. Le volume microporeux est déterminé selon Dubinin et Raduskevitch à partir de l'isotherme obtenu, en appliquant la norme ISO 15901-3 (2007). Le volume microporeux évalué selon l'équation de Dubinin et Raduskevitch s'exprime en cm³ d'adsorbat liquide par gramme d'adsorbant. L'incertitude de mesure est de ± 0,003 cm³.g⁻¹.

### Mesure de la surface externe mésoporeuse (m²/g) par la méthode dite du t-plot :

La méthode de calcul dite du t-plot exploite les données de l'isotherme d'adsorption Q ads = f (P/P0) et permet de calculer la surface microporeuse. On peut en déduire la surface externe en faisant la différence avec la surface BET qui calcule la surface poreuse totale en m²/g (S BET = Surface microporeuse + Surface externe mésoporeuse).

Pour calculer la surface microporeuse par la méthode t-plot, on trace la courbe Q ads (cm³.g⁻¹) en fonction de t = épaisseur de la couche dépendant de la pression partielle P/P0 qui se formerait sur un solide non poreux de référence (t fonction de log (P/P0) : équation de Harkins et Jura appliquée : [13,99/(0,034-log(P/P0))^0,5]. Dans l'intervalle t compris entre 0,35 nm et 0,5 nm, on peut tracer une droite qui définit une ordonnée à l'origine Q adsorbée qui permet de calculer la surface microporeuse. Si le solide n'est pas microporeux la droite passe par 0.

### Observation de la structure mésoporeuse par Microscopie Électronique à Transmission

Après broyage des adsorbants au mortier, la poudre obtenue est dispersée dans l'éthanol pendant 1 minute sous ultrasons. On dépose une goutte de la solution sur une grille de microscopie. On laisse sécher l'échantillon à l'ambiante.

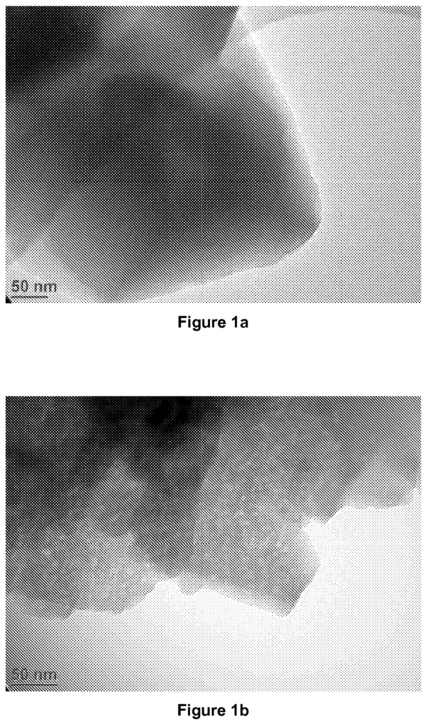

L'observation se fait avec un microscope électronique à transmission (CM 200 de FEI) sous une tension de 120 kV. Les Figures 1a et 1b montrent des clichés MET obtenus avec un grossissement de x 220000 d'un adsorbant de référence (Figure 1a) et de l'adsorbant selon l'invention (Figure 1b). Le cliché de la Figure 1b permet de visualiser la présence des mésopores et d'estimer leurs diamètres.

### Granulométrie des cristaux :

L'estimation du diamètre moyen en nombre des cristaux de zéolithe mésoporeuse utilisée à l'étape a) et des cristaux des zéolithes contenues dans les agglomérés est réalisée comme indiqué précédemment par observation au microscope électronique à balayage (MEB).

Afin d'estimer la taille des cristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.

### Résistance à l'écrasement en lit :

La résistance à l'écrasement d'un lit d'adsorbants zéolithiques tels que décrits dans la présente invention est caractérisée selon la méthode Shell série SMS1471-74 (Shell Method Series SMS1471-74 « Détermination of Bulk Crushing Strength of Catalysts. Compression-Sieve Method »), associée à l'appareil « BCS Tester » commercialisé par la société Vinci Technologies. Cette méthode, initialement destinée à la caractérisation de catalyseurs de taille comprise entre 3 mm et 6 mm, est basée sur l'utilisation d'un tamis de 425 µm qui va permettre notamment de séparer les fines créées lors de l'écrasement. L'utilisation d'un tamis de 425 µm reste adaptée pour des particules de diamètre supérieur à 1,6 mm mais doit être adapté selon la granulométrie des agglomérés que l'on cherche à caractériser.

### Résistance à l'écrasement en grains :

Les résistances mécaniques à l'écrasement en grains sont déterminées avec un appareil « Grain Crushing strength » commercialisé par Vinci Technologies, selon les normes ASTM D 4179 et D 6175.

### Mesure du ratio Si/Al:

Le matériau zéolithique aggloméré de l'invention a été évalué quant au ratio Si/Al par analyse chimique élémentaire dudit matériau zéolithique aggloméré, et plus précisément par analyse chimique par fluorescence de rayons X telle que décrite dans la norme NF EN ISO 12677 (2011) sur un spectromètre dispersif en longueur d'onde (WDXRF), par exemple Tiger S8 de la société Bruker. Le spectre de fluorescence X présente l'avantage de dépendre très peu de la combinaison chimique de l'élément, ce qui offre une détermination précise, à la fois quantitative et qualitative.

On obtient de manière classique après étalonnage pour chaque oxyde, entre autres pour SiO₂ et Al₂O₃, une incertitude de mesure inférieure à 0,4% en poids. L'incertitude de mesure du ratio atomique Si/Al est de ± 5%.

### Exemple 1 : Synthèse de zéolithe mésoporeuse de type X avec ajout de gel de nucléation et gel de croissance avec ratio TPOAC/AbO₃ = 0,04

### a) Préparation du gel de croissance dans réacteur agité avec vis d'Archimède à 300 tr/min.

Dans un réacteur en inox muni d'une double enveloppe chauffante, d'une sonde température et d'un agitateur, on prépare un gel de croissance en mélangeant une solution d'aluminate contenant 119 g d'hydroxyde de sodium (NaOH), 128 g d'alumine trihydratée (Al₂O₃, 3H₂O, contenant 65,2% en poids d'Al₂O₃) et 195,5 g eau à 25°C en 25 minutes avec une vitesse d'agitation de 300 tr.min⁻¹ dans une solution de silicate contenant 565,3 g de silicate de sodium, 55,3 g de NaOH et 1997,5 g d'eau à 25°C.

La stoechiométrie du gel de croissance est la suivante : 3,48 Na₂O / Al₂O₃ / 3,07 SiO₂ / 180 H₂O. L'homogénéisation du gel de croissance est réalisée sous agitation à 300 tr.min⁻¹, pendant 25 minutes, à 25°C.

### b) Ajout du gel de nucléation

On ajoute au gel de croissance, à 25°C sous agitation à 300 tr.min⁻¹, 61,2 g de gel de nucléation (soit 2 % en poids) de composition 12 Na₂O/ Al₂O₃ / 10 SiO₂ / 180 H₂O préparé de la même manière que le gel de croissance, et ayant mûri pendant 1 heure à 40°C. Après 5 minutes d'homogénéisation à 300 tr.min⁻¹, la vitesse d'agitation est diminuée à 100 tr.min⁻¹ et poursuivie pendant 30 minutes.

### c) Introduction dans le milieu réactionnel de l'agent structurant

On introduit dans le milieu réactionnel 27,3 g de solution de TPOAC à 60% dans le méthanol (MeOH) avec une vitesse d'agitation de 300 tr.min⁻¹ (ratio molaire TPOAC/Al₂O₃ = 0,04). On opère à 25°C une étape de maturation pendant 1 heure à 300 tr.min⁻¹ avant de démarrer la cristallisation.

### d) Cristallisation

On abaisse la vitesse d'agitation à 50 tr.min⁻¹ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

### e) Filtration / lavage

Les solides sont récupérés sur fritté puis lavés avec de l'eau permutée jusqu'à pH neutre.

### f) Séchage / Calcination

Afin de caractériser le produit, le séchage est réalisé en étuve à 90°C pendant 8 heures, la perte au feu du produit séché est de 23% en poids.

La calcination du produit séché nécessaire pour libérer à la fois la microporosité (eau) et la mésoporosité en éliminant l'agent structurant est effectuée avec le profil de température suivant : 30 minutes de montée en température à 200°C, puis 1 heure de palier à 200°C, puis 3 heures de montée en température à 550°C, et enfin 1,5 heures de palier à 550°C.

On obtient ainsi 255 g de solide équivalent anhydre de zéolithe XPH ; ce qui représente un rendement de 99 % molaire par rapport à la quantité d'aluminium engagée. Le rapport Si/Al de la ZPH déterminé par fluorescence X est égal à 1,24.

À titre de comparaison pour la préparation d'un matériau zéolithique aggloméré, on utilise une zéolithe commerciale non mésoporeuse de rapport atomique Si/Al égal à 1,25. Cette zéolithe de référence est par exemple la Siliporite® G5 AP, commercialisée par la société CECA.

Les caractéristiques de la zéolithe X mésoporeuse préparée dans cet exemple 1 et les caractéristiques de la zéolithe de référence indiquée ci-dessus sont regroupées dans le Tableau 1 suivant :

**-- Tableau 1 --**

| | ***Référence*** | ***Zéolite X non mésoporeuse de référence*** | ***Zéolithe X mésoporeuse (Exemple 1)*** |
|---|---|---|---|
| Synthèse | ratio molaire TPOAC/Al₂O₃ | - | 0,04 |
| | durée synthèse (h) | - | 24 |
| Isotherme adsorption d'azote à 77 K | Volume microporeux (cm³/g) | 0,342 | 0,335 |
| | Surface externe mésoporeuse (m²/g) | 35 | 105 |
| | Taille des mésopores (nm) | - | 5 à 10 |
| Spectre DRX (diffractogramme) | Phase cristalline | X pure | X pure |
| | Cristallinité X (%) | 100 | 100 |
| MEB | taille des cristaux (µm) | 1,5 | 1 à 3 |

La distribution de la taille des mésopores est calculée par la méthode Density Functional Theory (DFT) avec le modèle Pores cylindriques. Le pourcentage de cristallinité est calculé au moyen du logiciel TOPAS utilisant la base ICDD PDF-2, release 2011.

### Exemple 2 : Préparation d'agglomérés de zéolithe X mésoporeuse (selon l'invention)

Dans ce qui suit les masses données sont exprimées en équivalent anhydre.

On prépare un mélange homogène constitué de 1600 g de cristaux de zéolithe X mésoporeuse obtenue à l'exemple 1, de 350 g de kaolin, de 130 g de silice colloïdale vendue sous la dénomination commerciale de Klebosol® 30 (contenant 30% en poids de SiO₂ et 0,5% de Na₂O) ainsi que de la quantité d'eau qui permet l'extrusion du mélange. La perte au feu de la pâte avant extrusion est de 44%.

On forme des extrudés de 1,6 mm de diamètre. Les extrudés sont séchés une nuit en étuve ventilée à 80°C. Ils sont ensuite calcinés pendant 2 h à 550°C sous balayage à l'azote, puis 2 h à 550°C sous balayage à l'air sec décarbonaté.

La résistance mécanique à l'écrasement sur grain des extrudés de zéolithe X mésoporeuse est de 2,6 daN. Leur masse volumique apparente est de 0,64 g/cm³.

### Exemple 3 : Préparation d'agglomérés de zéolithe X non mésoporeuse (comparatif)

Les opérations de l'exemple 2 sont répétés à l'identique en substituant la zéolithe X mésoporeuse par la zéolithe X non mésoporeuse de référence. La résistance mécanique à l'écrasement sur grain des extrudés de zéolithe X non mésoporeuse de référence est de 2,5 daN. Leur masse volumique apparente est de 0,66 g/cm³.

On observe ainsi que le matériau zéolithique aggloméré selon l'invention comprenant une zéolithe X mésoporeuse présente des caractéristiques mécaniques ainsi qu'une densité apparente tout à fait comparables à celles d'un matériau zéolithique aggloméré comportant une zéolithe non mésoporeuse.

Il est ainsi tout à fait remarquable que la présente invention permet de disposer de matériaux zéolithiques agglomérés combinant à la fois les propriétés des zéolithes mésoporeuses, les propriétés liées à la microporosité et les propriétés mécaniques des agglomérés zéolithiques connus jusqu'à présent. Il est ainsi possible d'envisager sans problème l'utilisation des matériaux zéolithiques agglomérés de l'invention dans tous les domaines d'applications industrielles tels que la catalyse, la séparation, l'adsorption, et autres.

### Exemple 4 : Comparaison des agglomérés des exemples 2 et 3 par rapport à un aggloméré de l'art antérieur

On utilise pour cette étude comparative, la zéolithe mésoporeuse obtenue par post-traitement d'une zéolithe X non mésoporeuse, et décrite dans la demande WO2013/106816 (PCT/US2013/021420), à l'exemple 4, tableau 4, dernière ligne du tableau.

On prépare un aggloméré à partir de cette zéolithe NaX selon le mode opératoire décrit à l'exemple 2 ci-dessus.

Les résultats de l'analyse comparative sont présentés dans le Tableau 2 suivant :

**-- Tableau 2 --**

| | **Isotherme adsorption d'azote à 77 K** | | **Spectre DRX (diffractogramme)** | |
|---|---|---|---|---|
| ***Aggloméré*** | ***Volume microporeux (cm³*/*g)*** | ***Surface externe mésoporeuse (m²*/*g)*** | ***Phase cristalline*** | ***Cristallinité (%)*** |
| Exemple 2 (selon l'invention) | 0,279 | 108 | X | 100% |
| Exemple 3 (comparatif) | 0,277 | 37 | X | 100% |
| Selon Tableau 4 de WO2013/106816 (PCT/US2013/021420), (comparatif) | 0,170 | 90 | X | 46% |

Le pourcentage de cristallinité est calculé par le logiciel TOPAS utilisant la base ICDD PDF-2, release 2011.

Les agglomérés selon l'invention présentent des volumes microporeux nettement supérieurs à ceux de l'art antérieur et des surfaces externes mésoporeuses au moins équivalentes. Ces résultats montrent que les agglomérés comprenant une zéolithe dont la mésoporosité a été obtenue par post-traitement présentent des caractéristiques de porosité nettement moins performantes que les agglomérés préparés selon l'invention.

## Revendications

1. Matériau zéolithique aggloméré comprenant au moins une zéolithe mésoporeuse, ladite zéolithe mésoporeuse étant choisie parmi les zéolithes mésoporeuses de structure LTA, EMT et FAU de rapport atomique Si/Al compris entre 1 et 1,4, bornes incluses, et éventuellement une ou plusieurs zéolithes non mésoporeuses, ledit matériau présentant au moins les caractéristiques suivantes :
• une teneur totale en zéolithe(s) d'au moins 70%, de préférence d'au moins 80%, de préférence encore d'au moins 90%, en poids par rapport au poids total de l'aggloméré,
• une teneur en zéolithe(s) mésoporeuse(s) supérieure ou égale à 30%, de préférence supérieure ou égale à 50%, de préférence encore supérieure ou égale à 70%, plus préférentiellement encore supérieure ou égale à 80%, et avantageusement supérieure ou égale à 90%,
• une teneur en liant, après calcination réalisée à 950°C pendant 1 heure, inférieure ou égale à 30%, de préférence inférieure ou égale à 20%, et avantageusement inférieure ou égale à 10%,
• un diamètre volumique moyen (D50), ou une longueur (plus grande dimension lorsque le matériau n'est pas sphérique), inférieur(e) ou égal(e) à 7 mm, de préférence compris entre 0,05 mm et 7 mm, de manière encore préférée compris entre 0,2 mm à 5 mm et plus préférentiellement entre 0,2 mm et 2,5 mm, bornes incluses, et
• soit une résistance à l'écrasement en lit (REL) mesurée selon la norme ASTM 7084-04 comprise entre 0,5 MPa et 3 MPa, de préférence entre 0,75 MPa et 2,5 MPa, pour un matériau de diamètre volumique moyen (D50), ou une longueur (plus grande dimension lorsque le matériau n'est pas sphérique), inférieur(e) à 1 mm, bornes incluses,
• soit une résistance à l'écrasement en grain, mesurée selon les normes ASTM D 4179 (2011) et ASTM D 6175 (2013), comprise entre 0,5 daN et 30 daN, de préférence comprise entre 1 daN et 20 daN, pour un matériau de diamètre volumique moyen (D50), ou une longueur (plus grande dimension lorsque le matériau n'est pas sphérique), supérieur(e) ou égal(e) à 1 mm, bornes incluses.

2. Matériau selon la revendication 1, présentant en outre une masse volumique apparente comprise entre 0,4 g.cm⁻³ et 1 g.cm⁻³, bornes incluses.

3. Matériau selon l'une quelconque des revendications 1 ou 2, dans lequel les cristaux de la (ou des) zéolithe(s), sont agglomérés avec un liant comprenant une argile ou un mélange d'argiles choisies parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions.

4. Matériau selon l'une quelconque des revendications 1 à 3, possédant à la fois les caractéristiques des zéolithes mésoporeuses, mais aussi les propriétés mécaniques des agglomérés zéolithiques conventionnels où la zéolithe est non-mésoporeuse.

5. Procédé de préparation d'un matériau selon l'une quelconque des revendications 1 à 4, comprenant au moins les étapes de :
a) agglomération de cristaux d'au moins une zéolithe mésoporeuse de diamètre moyen en nombre compris entre 0,1 µm et 20 µm, de préférence entre 0,1 µm et 10 µm, de manière plus préférée entre 0,5 µm et 10 µm et plus préférentiellement encore entre 0,5 µm et 5 µm, et de surface externe mésoporeuse, définie par la méthode du t-plot, comprise entre 40 m².g⁻¹ et 400 m².g⁻¹, de préférence entre 60 m².g⁻¹ et 200 m².g⁻¹, bornes incluses, avec un liant comprenant au moins 80% d'argile ou d'un mélange d'argiles, éventuellement zéolithisable(s), et avec jusqu'à 5% d'additifs, ainsi qu'avec la quantité d'eau qui permet la mise en forme du matériau aggloméré, ladite zéolithe mésoporeuse étant choisie parmi les zéolithes mésoporeuses de structure LTA, EMT et FAU de rapport atomique Si/Al compris entre 1 et 1,4, bornes incluses, le liant comprenant une argile ou un mélange d'argiles choisies parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions ;
b) séchage des agglomérats à une température comprise entre 50°C et 150°C ;
c) calcination des agglomérats de l'étape b) sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une température supérieure à 150°C, typiquement comprise entre 180°C et 800°C, préférentiellement entre 200°C et 650°C, pendant quelques heures, par exemple de 2 à 6 heures ;
d) éventuellement zéolithisation du liant par mise en contact des agglomérats obtenus à l'étape c) avec une solution basique alcaline ;
e) éventuellement échange(s) cationique(s) des agglomérats de l'étape c) ou de l'étape d) par mise en contact avec une solution d'au moins un sel de métal alcalin ou alcalino-terreux ;
f) puis lavage et séchage des agglomérats obtenus aux étapes d) ou e) dans les conditions décrites à l'étape b), et
g) obtention du matériau zéolithique aggloméré par activation des agglomérats obtenus à l'étape f) dans les conditions décrites à l'étape c)

6. Procédé selon la revendication 5, dans lequel on procède, à l'étape a), à l'agglomération de cristaux d'une zéolithe préparée en présence d'un gabarit sacrificiel.

7. Procédé selon la revendication 6, dans lequel le gabarit sacrificiel est choisi parmi les composés de type organosilanes, les oligomères, et autres.

8. Procédé selon la revendication 7, dans lequel l'élimination dudit gabarit sacrificiel est effectuée par calcination des cristaux de zéolithe avant l'étape d'agglomération a), ou encore de manière concomitante avec l'étape c).

## Patentansprüche

1. Agglomeriertes zeolithisches Material, umfassend mindestens einen mesoporösen Zeolith, wobei der mesoporöse Zeolith aus mesoporösen Zeolithen mit LTA-, EMT- und FAU-Struktur und einem Si/Al-Atomverhältnis zwischen 1 und 1,4, wobei die Grenzen eingeschlossen sind, ausgewählt ist, und gegebenenfalls einen oder mehrere nicht mesoporöse Zeolithe, wobei das Material mindestens die folgenden Eigenschaften aufweist:
• einen Gesamtgehalt an Zeolith(en) von mindestens 70 Gew.-%, vorzugsweise mindestens 80 Gew.-%, weiter bevorzugt mindestens 90 Gew.-%, bezogen auf das Gesamtgewicht des Agglomerats,
• einen Gehalt an mesoporösem Zeolith bzw. mesoporösen Zeolithen größer oder gleich 30 %, vorzugsweise größer oder gleich 50 %, weiter bevorzugt größer oder gleich 70 %, noch weiter bevorzugt größer oder gleich 80 % und vorteilhafterweise größer oder gleich 90 %,
• einen Bindemittelgehalt nach Calcinierung bei 950 °C über einen Zeitraum von 1 Stunde kleiner oder gleich 30 %, vorzugsweise kleiner oder gleich 20 % und vorteilhafterweise kleiner oder gleich 10 %,
• einen mittleren Volumendurchmesser (D50) oder eine Länge (größte Abmessung, wenn das Material nicht kugelförmig ist) kleiner oder gleich 7 mm, vorzugsweise zwischen 0,5 mm und 7 mm, noch weiter bevorzugt zwischen 0,2 mm und 5 mm und weiter bevorzugt zwischen 0,2 mm und 2,5 mm, wobei die Grenzen eingeschlossen sind, und
• entweder eine gemäß der ASTM-Norm 7084-04 gemessene Druckfestigkeit im Bett (Bulk Crushing Strength, BCS) zwischen 0,5 MPa und 3 MPa, vorzugsweise zwischen 0,75 MPa und 2,5 MPa, für ein Material mit einem mittleren Volumendurchmesser (D50) oder einer Länge (größte Abmessung, wenn das Material nicht kugelförmig ist) von weniger als 1 mm, wobei die Grenzen eingeschlossen sind,
• oder eine gemäß ASTM-Norm D 4179 (2011) und ASTM-Norm D 6175 (2013) gemessene Druckfestigkeit im Korn zwischen 0,5 daN und 30 daN, vorzugsweise zwischen 1 daN und 20 daN, für ein Material mit einem mittleren Volumendurchmesser (D50) oder einer Länge (größte Abmessung, wenn das Material nicht kugelförmig ist) größer oder gleich 1 mm, wobei die Grenzen eingeschlossen sind.

2. Material nach Anspruch 1, das außerdem eine Rohdichte zwischen 0,4 g.cm⁻³ und 1 g.cm⁻³ aufweist, wobei die Grenzen eingeschlossen sind.

3. Material nach einem der Ansprüche 1 oder 2, wobei die Kristalle des Zeoliths (bzw. der Zeolithe) mit einem Bindemittel, das einen Ton oder eine Mischung von Tonen umfasst, die aus Kaolinen, Kaoliniten, Nacriten, Dickiten, Halloysiten, Attapulgiten, Sepiolithen, Montmorilloniten, Bentoniten, Illiten und Metakaolinen sowie Mischungen von zwei oder mehreren davon in beliebigen Anteilen ausgewählt sind, agglomeriert sind.

4. Material nach einem der Ansprüche 1 bis 3, das sowohl die Merkmale von mesoporösen Zeolithen als auch die mechanischen Eigenschaften von herkömmlichen zeolithischen Agglomeraten, bei denen der Zeolith nicht mesoporös ist, besitzt.

5. Verfahren zur Herstellung eines Materials nach einem der Ansprüche 1 bis 4, das mindestens folgende Schritte umfasst:
a) Agglomeration von Kristallen von mindestens einem mesoporösen Zeolith mit einem zahlenmittleren Durchmesser zwischen 0,1 µm und 20 pm, vorzugsweise zwischen 0,1 µm und 10 µm, weiter bevorzugt zwischen 0,5 µm und 10 µm und noch weiter bevorzugt zwischen 0,5 µm und 5 µm und einer durch die t-Plot-Methode definierten externen Mesoporenoberfläche zwischen 40 m².g⁻¹ und 400 m².g⁻¹, vorzugsweise zwischen 60 m².g⁻¹ und 200 m².g⁻¹, wobei die Grenzen eingeschlossen sind, mit einem Bindemittel, das mindestens 80 % Ton oder einer Mischung von Tonen umfasst, der bzw. die gegebenenfalls zeolithisierbar ist bzw. sind, und mit bis zu 5 % Additiven sowie mit der Wassermenge, die das Formen des agglomerierten Materials erlaubt, wobei der mesoporöse Zeolith aus mesoporösen Zeolithen mit LTA-, EMT- und FAU-Struktur mit einem Si/Al-Atomverhältnis zwischen 1 und 1,4, wobei die Grenzen eingeschlossen sind, ausgewählt ist, wobei das Bindemittel einen Ton oder eine Mischung von Tonen, die aus Kaolinen, Kaoliniten, Nacriten, Dickiten, Halloysiten, Attapulgiten, Sepiolithen, Montmorilloniten, Bentoniten, Illiten und Metakaolinen sowie Mischungen von zwei oder mehreren davon in beliebigen Anteilen ausgewählt sind, umfasst;
b) Trocknung der Agglomerate bei einer Temperatur zwischen 50 °C und 150 °C;
c) Calcinierung der Agglomerate aus Schritt b) unter Spülung mit oxidierenden und/oder inerten Gasen, insbesondere mit Gasen wie Sauerstoff, Stickstoff, Luft, trockener und/oder decarbonatisierter Luft, sauerstoffarmer Luft, die gegebenenfalls trocken und/oder decarbonatisiert ist, bei einer Temperatur von mehr als 150 °C, typischerweise zwischen 180 °C und 800 °C, vorzugsweise zwischen 200 °C und 650 °C, über einen Zeitraum von einigen Stunden, beispielsweise von 2 bis 6 Stunden;
d) gegebenenfalls Zeolithisierung des Bindemittels durch Inkontaktbringen der in Schritt c) erhaltenen Agglomerate mit einer alkalischen basischen Lösung;
e) gegebenenfalls Kationenaustausch(e) der Agglomerate aus Schritt c) oder Schritt d) durch Inkontaktbringen mit einer Lösung mindestens eines Alkalimetall- oder Erdalkalimetallsalzes;
f) dann Waschen und Trocknen der in Schritt d) oder e) erhaltenen Agglomerate unter den in Schritt b) beschriebenen Bedingungen und
g) Erhalt des agglomerierten zeolithischen Materials durch Aktivierung der in Schritt f) erhaltenen Agglomerate unter den in Schritt c) beschriebenen Bedingungen.

6. Verfahren nach Anspruch 5, wobei in Schritt a) die Agglomeration von Kristallen eines in Gegenwart eines Opfertemplats hergestellten Zeoliths durchgeführt wird.

7. Verfahren nach Anspruch 6, wobei das Opfertemplat aus Verbindungen vom Organosilan-Typ, Oligomeren und anderen ausgewählt wird.

8. Verfahren nach Anspruch 7, wobei die Entfernung des Opfertemplats durch Calcinierung der Zeolithkristalle vor dem Agglomerationsschritt a) oder gleichzeitig mit Schritt c) durchgeführt wird.

## Claims

1. Agglomerated zeolite material comprising at least one mesoporous zeolite, said mesoporous zeolite being chosen from mesoporous zeolites of LTA, EMT and FAU structure with an Si/Al atomic ratio of between 1 and 1.4, limits inclusive, and optionally one or more non-mesoporous zeolites, the said material having at least the following characteristics:
• a total zeolite content of at least 70%, preferably of at least 80%, more preferably of at least 90% by weight relative to the total weight of the agglomerate,
• a content of mesoporous zeolite(s) of greater than or equal to 30%, preferably greater than or equal to 50%, more preferably greater than or equal to 70%, even more preferentially greater than or equal to 80% and advantageously greater than or equal to 90%,
• a binder content, after calcination performed at 950°C for 1 hour, of less than or equal to 30%, preferably less than or equal to 20% and advantageously less than or equal to 10%,
• a mean volume diameter (D50), or a length (largest dimension when the material is not spherical) of less than or equal to 7 mm, preferably between 0.05 mm and 7 mm, more preferably between 0.2 mm and 5 mm and more preferentially between 0.2 mm and 2.5 mm, limits inclusive, and
• either a bulk crushing strength (BCS) measured according to standard ASTM 7084-04 of between 0.5 MPa and 3 MPa, preferably between 0.75 MPa and 2.5 MPa, for a material with a mean volume diameter (D50), or a length (largest dimension when the material is not spherical), of less than 1 mm, limits inclusive,
• or a grain crushing strength, measured according to standards ASTM D 4179 (2011) and ASTM D 6175 (2013), of between 0.5 daN and 30 daN, preferably between 1 daN and 20 daN, for a material with a mean volume diameter (D50), or a length (largest dimension when the material is not spherical), of greater than or equal to 1 mm, limits inclusive.

2. Material according to Claim 1, also having an apparent mass per unit volume of between 0.4 g.cm⁻³ and 1 g.cm⁻³, limits inclusive.

3. Material according to Claim 1 or Claim 2, in which the zeolite crystals are agglomerated with a binder comprising a clay or a mixture of clays chosen from kaolins, kaolinites, nacrites, dickites, halloysites, attapulgites, sepiolites, montmorillonites, bentonites, illites and metakaolins, and also mixtures of two or more thereof in any proportions.

4. Material according to any one of Claims 1 to 3, having both the characteristics of mesoporous zeolites, but also the mechanical properties of conventional zeolite agglomerates in which the zeolite is non-mesoporous.

5. Process for preparing a material according to any one of Claims 1 to 4, comprising at least the steps of:
a) agglomeration of crystals of at least one mesoporous zeolite with a number-average diameter of between 0.1 µm and 20 µm, preferably between 0.1 µm and 10 µm, more preferably between 0.5 µm and 10 µm and even more preferentially between 0.5 µm and 5 µm, and with a mesopore outer surface area, defined by the t-plot method, of between 40 m².g⁻¹ and 400 m².g⁻¹ and preferably between 60 m².g⁻¹ and 200 m².g⁻¹, limits inclusive, with a binder comprising at least 80% clay or a mixture of clays, which are optionally zeolitizable, and with up to 5% of additives, and also with the amount of water that allows the shaping of the agglomerated material, said mesoporous zeolite being chosen from mesoporous zeolites of LTA, EMT and FAU structure with an Si/Al atomic ratio of between 1 and 1.4, limits inclusive, the binder comprising a clay or a mixture of clays chosen from kaolins, kaolinites, nacrites, dickites, halloysites, attapulgites, sepiolites, montmorillonites, bentonites, illites and metakaolins, and also mixtures of two or more thereof in any proportions;
b) drying of the agglomerates at a temperature of between 50°C and 150°C;
c) calcination of the agglomerates of step b) with flushing with an oxidizing and/or inert gas, especially with gases such as oxygen, nitrogen, air, a dry and/or decarbonated air, an oxygen-depleted air, which is optionally dry and/or decarbonated, at a temperature above 150°C, typically between 180°C and 800°C and preferentially between 200°C and 650°C, for a few hours, for example from 2 to 6 hours;
d) optionally zeolitization of the binder by placing the agglomerates obtained in step c) in contact with an alkaline basic solution;
e) optionally cation exchange(s) of the agglomerates of step c) or of step d) by placing in contact with a solution of at least one alkali metal or alkaline-earth metal salt;
f) and then washing and drying of the agglomerates obtained in steps d) or e) under the conditions described in step b), and
g) production of the agglomerated zeolite material by activation of the agglomerates obtained in step f) under the conditions described in step c).

6. Process according to Claim 5, in which, in step a), agglomeration of crystals of a zeolite prepared in the presence of a sacrificial template is performed.

7. Process according to Claim 6, in which the sacrificial template is chosen from compounds of organosilane type and oligomers, and the like.

8. Process according to Claim 7, in which the removal of the said sacrificial template is performed by calcination of the zeolite crystals before the agglomeration step a), or concomitantly with step c).
